# EUROPÄISCHE PATENTANMELDUNG

(11) **EP 2 645 461 A1**
(43) Veröffentlichungstag der Anmeldung: **02.10.2013**
(21) Anmeldenummer: 12162493.6
(22) Anmeldetag: 30.03.2012
(51) Int. Cl.: H01M 8/04

(54) **Kühlkreislauf zum Kühlen einer elektrochemischen Zelle sowie Verfahren zum Betreiben eines solchen Kühlkreislaufs**

(71) Anmelder: Siemens Aktiengesellschaft, 80333 München (DE)
(72) Erfinder: Brandt, Torsten, 91301 Forchheim (DE); Braunecker, Michael, 90491 Nürnberg (DE); Stühler, Walter, 96114 Hirschaid (DE)

(57) **Zusammenfassung**

Die Erfindung betrifft ein Kühlkreislauf (2a, 2b) zum Kühlen einer elektrochemischen Zelle (3), insbesondere einer Brennstoffzellenanordnung (4), mit Hilfe einer Kühlflüssigkeit (K) zum Abführen von Wärme aus der elektrochemischen Zelle (3). Im Hinblick auf eine besonders effiziente Entgasung der Kühlflüssigkeit umfasst der Kühlkreislauf (2a, 2b) eine Vorrichtung (6) zum Erzeugen eines Druckabfalls von einem höheren Arbeitsdruck (pₐ), den die Kühlflüssigkeit (K) beim Kühlvorgang in der elektrochemischen Zelle (3) aufweist, auf einen niedrigeren Systemdruck (pₛ), der außerhalb der elektrochemischen Zelle (3) herrscht. Der Vorrichtung (6) zum Erzeugen des Druckabfalls ist ein Entgaser (8) zum Entfernen von Gas, welches aus der Kühlflüssigkeit (K) entweicht, nachgeschaltet.

## Beschreibung

Die Erfindung betrifft einen Kühlkreislauf zum Kühlen einer elektrochemischen Zelle, insbesondere einer Brennstoffzellenanordnung. Die Erfindung betrifft weiterhin ein Verfahren zum Betreiben eines solchen Kühlkreislaufs.

Elektrochemische Zellen sind allgemein bekannt und werden unterteilt in galvanische Zellen und Elektrolysezellen. Eine Elektrolysezelle ist eine Vorrichtung, bei der ein elektrischer Strom eine chemische Reaktion erzwingt, wobei zumindest ein Teil der elektrischen Energie in chemische Energie umgewandelt wird. Eine galvanische Zelle ist eine - zur Elektrolysezelle komplementäre - Vorrichtung zur spontanen Umwandlung von chemischer in elektrische Energie. Eine bekannte Vorrichtung einer solchen galvanischen Zelle ist eine Brennstoffzelle, beispielsweise eine so genannte PEM-Brennstoffzelle (Proton Exchange Membrane-Brennstoffzelle oder Polymer-Elektrolyt-Membran-Brennstoffzelle).

Die PEM-Brennstoffzelle umfasst zwei Elektroden, die durch die Elektrolyt-Membran voneinander getrennt sind. In einer Brennstoffzellenanordnung, wobei unter Brennstoffzellenanordnung hierbei mehrere hintereinander geschalteten Brennstoffzellen, wie z.B. ein Brennstoffzellenstapel oder eine Brennstoffzellenanlage, umfassend mehrere Brennstoffzellenstapel, verstanden wird, befinden sich die Elektroden an der der Elektrolyt-Membran abgewandten Seite jeweils in Kontakt mit einer so genannten Bipolarplatte oder Kühleinheit. Die Bipolarplatte hat die Aufgabe, die einzelnen Brennstoffzellen (medienseitig) zu trennen, für Stromfluss im Zellenstapel zu sorgen und die Reaktionswärme zu entfernen.

Im Betrieb einer Brennstoffzelle muss entsprechende Verlustwärme aus dem aktiven Bereich der Brennstoffzelle entfernt werden, um lokale Überhitzungen in der Brennstoffzelle zu vermeiden. Dies erfolgt bei hohen Stromdichten in einer Brennstoffzelle am effektivsten durch ein flüssiges Kühlmittel oder eine Kühlflüssigkeit, welche die Brennstoffzelle durchströmt. Wegen seiner hohen spezifischen Wärmekapazität, der geringen elektrischen Leitfähigkeit, der guten Medienverträglichkeit und der niedrigen Betriebskosten kommt bei PEM-Brennstoffzellen hautsächlich Deionat als Kühlflüssigkeit zum Einsatz. Die Kühlflüssigkeit darf nur eine sehr geringe Leitfähigkeit haben und sollte möglichst gasfrei sein, damit sich keine Gasblasen an der Oberfläche der so genannten Bipolarplatten festsetzen, da Bereiche mit Gasblasen schlechter gekühlt werden und daher lokal überhitzt werden. Aufgrund physikalischer und konstruktiver Vorgaben ist jedoch nicht auszuschließen, dass auch eine ursprünglich gasfreie Kühlflüssigkeit wieder Gas aufnimmt und mit Blasen versehen ist.

Bei der Inbetriebnahme einer Brennstoffzellenanlage wird i. d. R. darauf geachtet, dass durch Umpumpen Gas aus dem System entfernt wird. Ziel dabei ist, kein Zwei-Phasen-Gemisch (z.B. Gas/Wasser) im Kühlmittel zuzulassen, so dass Gasansammlungen und somit lokale Überhitzungen (so genannte "hot spots") an den Bipolarplatten nicht auftreten können. Zum Entgasen des Kühlmittels sind für gewöhnlich so genannte Vakuum-Entgaser vorgesehen, bei denen das Vakuum durch Vakuumpumpen erzeugt wird. Der Betriebsdruck bei einem Vakuum-Entgaser liegt, in Abhängigkeit von der Betriebstemperatur, unter 1 bar.

Der Erfindung liegt die Aufgabe zugrunde, eine effiziente Entgasung der Kühlflüssigkeit eines Kühlkreislaufs zu ermöglichen.

Die Aufgabe wird erfindungsgemäß gelöst durch einen Kühlkreislauf zum Kühlen einer elektrochemischen Zelle, insbesondere einer Brennstoffzellenanordnung, mit Hilfe einer Kühlflüssigkeit zum Abführen von Wärme aus der elektrochemischen Zelle, wobei eine Vorrichtung zum Erzeugen eines Druckabfalls von einem höheren Arbeitsdruck, den die Kühlflüssigkeit beim Kühlvorgang in der elektrochemischen Zelle aufweist, auf einen niedrigeren Systemdruck, der außerhalb der elektrochemischen Zelle herrscht, vorgesehen ist und wobei der Vorrichtung zum Erzeugen des Druckabfalls ein Entgaser zum Entfernen von Gas, welches aus der Kühlflüssigkeit entweicht, nachgeschaltet ist.

Die Aufgabe wird weiterhin erfindungsgemäß gelöst durch ein Verfahren zum Betreiben eines Kühlkreislaufs zum Kühlen einer elektrochemischen Zelle, insbesondere einer Brennstoffzellenanordnung, wobei mit Hilfe einer Kühlflüssigkeit Wärme aus der elektrochemischen Zelle abgeführt wird, wobei im Kühlkreislauf ein Druckabfall von einem höheren Arbeitsdruck, den die Kühlflüssigkeit beim Kühlvorgang in der elektrochemischen Zelle aufweist, auf einen niedrigeren Systemdruck, der im Kühlkreislauf außerhalb der elektrochemischen Zelle herrscht, erzeugt wird und wobei nach dem Druckabfall Gas, welches aus der Kühlflüssigkeit entweicht, entfernt wird.

Die in Bezug auf den Kühlkreislauf nachstehend angeführten Vorteile und bevorzugten Ausführungen lassen sich sinngemäß auf das Verfahren zum Betreiben des Kühlkreislaufs übertragen.

Mit Systemdruck wird hierbei der Druck in den Leitungen und insbesondere in den meisten Komponenten des Kühlkreislaufs bezeichnet. Mit Arbeitsdruck wird ein gegenüber dem Systemdruck erhöhten Druck bezeichnet, der zumindest in der elektrochemischen Zelle eingestellt ist. Unter Druckabfall wird die Druckdifferenz zwischen dem höheren Arbeitsdruck und dem niedrigeren Systemdruck verstanden, welcher Druckabfall nach der elektrochemischen Zelle insbesondere sprunghaft erfolgt.

Die Erfindung geht von der Überlegung aus, dass im Hinblick auf eine effiziente Entgasung der Kühlflüssigkeit, die einen störungsfreien Betrieb der elektrochemischen Zelle begünstigt, lediglich ein Drucksprung von einem höheren Druckniveau auf einen niedrigeren Druckniveau erforderlich ist, wobei das niedrigere Druckniveau nicht zwingend erforderlich unterhalb des Umgebungsdruck liegt. Durch den Druckabfall wird das in der Kühlflüssigkeit enthaltene Gas freigesetzt und kann aus dem System entfernt werden. Im Gegensatz zur bisherigen Praxis, bei der in der elektrochemischen Zelle im Wesentlichen Systemdruck herrscht, so dass ein Druckgefälle generiert wird, indem der Druck im Entgaser unterhalb des Systemdrucks liegt und insbesondere auf Unterdruck eingestellt ist, geht die vorliegende Erfindung von der Erkenntnis aus, dass ein ausreichend größer Druckabfall auch erzeugt werden kann, indem zunächst der Druck der Kühlflüssigkeit gegenüber dem Systemdruck erhöht wird, die Kühlflüssigkeit nimmt dabei das Gas unter dem erhöhten Arbeitsdruck auf, und anschließend wird der Druck der Kühlflüssigkeit zum Freisetzen des aufgenommenen Gases erneut auf den Systemdruck herabgesetzt.

Diese Vorgehensweise zeichnet sich durch drei wesentliche Vorteile aus:
Zum einen kann die Kühlflüssigkeit, wenn sie sich auf dem höheren Druckniveau befindet, beim Kühlvorgang in der elektrochemischen Zelle mehr schädliches Gas aufnehmen, so dass die vorhandene Menge Gas schneller aus der elektrochemischen Zelle wegtransportiert und ein Zwei-Phasen-Gemisch in der Brennstoffzelle vermieden wird.
Zum anderen ist die Gasfreisetzung durch den Druckabfall im Kühlkreislauf außerhalb der elektrochemischen Zelle begünstigt und es kann eine Untersättigung der Kühlflüssigkeit bezogen auf den Arbeitsdruck ohne weitere aktive Komponenten, z.B. Vakuum-Entgaser, erreicht werden.
Und nicht zuletzt wird durch den erhöhten Druck der Kühlflüssigkeit in der elektrochemischen Zelle der Wärmeübergang begünstigt.

Die Erhöhung des Drucks der Kühlflüssigkeit in der elektrochemischen Zelle eröffnet die Möglichkeit, den Druckabfall zwischen der elektrochemischen Zelle und dem Entgaser primär durch das Einstellen eines gewünschten, hohen Arbeitsdruck in der elektrochemischen Zelle zu regulieren. Dies wiederum ermöglicht eine passive Abführung des freigesetzten Gases, indem der Entgaser vorzugsweise für ein Entfernen des freigesetzten Gases bei Systemdruck ausgebildet ist. Somit herrscht im Entgaser insbesondere ebenfalls Systemdruck, der in den meisten restlichen Komponenten des Kühlkreislaufs (ausgenommen der elektrochemischen Zelle) eingestellt ist, und es muss keine mechanische Arbeit verrichtet werden, um einen Unterdruck im Entgaser gegenüber dem Systemdruck zu erzeugen.

Gemäß einer bevorzugten Ausführung ist die Vorrichtung zum Erzeugen des Druckabfalls unmittelbar der elektrochemischen Zelle nachgeschaltet. Unter "unmittelbar nachgeschaltet" wird hierbei eine Anordnung verstanden, bei der zwischen der elektrochemischen Zelle und der Vorrichtung zum Erzeugen des Druckabfalls sich keine wesentlichen Komponenten des Kühlkreislaufs befinden. Somit ist der Bereich mit dem höheren Arbeitsdruck möglichst begrenzt, insbesondere ist der Arbeitsdruck lediglich in der Kühleinheit der elektrochemischen Zelle eingestellt. Dabei wird insbesondere berücksichtigt, dass durch die unmittelbare Nähe der Vorrichtung zum Erzeugen des Druckabfalls kein großer Druckverlust in den Leitungen der Kühlkreislauf zwischen der elektrochemischen Zelle und der Drosselungsvorrichtung entstehen kann. Der durch die Vorrichtung zum Erzeugen des Druckabfalls hervorgerufene Drucksprung ist somit möglichst groß, was sich positiv auf die Freisetzung des in der Kühlflüssigkeit enthaltenen Gases auswirkt.

Gemäß einer weiteren bevorzugten Ausführung liegt der Systemdruck geringfügig über dem Umgebungsdruck, insbesondere liegt der Systemdruck ca. 0,5 bar bis 2,5 bar über dem Umgebungsdruck. Da der Systemdruck nur geringfügig über dem Umgebungsdruck liegt, sind die Komponenten einfacher auszulegen als bei höherem Druck. Der Druck variiert in den verschiedenen Teilen des Kühlkreislaufs wegen dem Druckverlust in den Leitungen. Bei einem maximal eingestellten Systemdruck von 2,5 bar über dem Umgebungsdruck ist genügend Spielraum vorhanden, um den Druckverlust des Systemdrucks zu kompensieren. Der minimale Systemdruck, der im Kühlkreislauf erreicht wird, nähert sich dem Umgebungsdruck, bleibt jedoch über dem Umgebungsdruck, denn wenn der Systemdruck zu niedrig ist, kann Kavitation in den Pumpen des Systems auftreten.

Zweckdienlicherweise liegt der Arbeitsdruck, bei dem die Kühlflüssigkeit die elektrochemische Zelle kühlt, mindestens 0,2 bar, insbesondere mindestens 0,25 bar über dem Systemdruck. Allgemein gilt, dass je größer die Differenz zwischen dem Arbeitsdruck und dem Systemdruck ist, desto effizienter die Entgasung ist. Eine viel zu große Druckdifferenz bedeutet jedoch ein großer Energieaufwand zum Erzeugen des höheren Arbeitsdrucks. Eine Druckdifferenz von ca. 0,2 - 0,25 bar hat sich hierbei als besonders effizient erwiesen.

Nach dem Durchlauf durch die elektrochemische Zelle erwärmt sich die Kühlflüssigkeit. Damit sie für Kühlzwecke im Kreislauf betrieben wird, ist ein Wärmetauscher vorgesehen, in dem die Kühlflüssigkeit die Abwärme der elektrochemischen Zelle an ein externes Kühlmittel abgibt und dadurch selbst abgekühlt wird. Vorteilhafterweise ist ein solcher Wärmetauscher dem Entgaser nachgeschaltet.

Vorzugsweise ist eine Pumpe zum Einspeisen der Kühlflüssigkeit in die elektrochemische Zelle vorgesehen, wobei der Arbeitsdruck zwischen der Pumpe und der Vorrichtung zum Erzeugen des Druckabfalls eingestellt ist. Die Grenzen des Bereichs, in dem der höhere Arbeitsdruck herrscht, sind somit durch die Pumpe und die Vorrichtung zum Erzeugen des Druckabfalls definiert. Hierdurch wird gewährleistet, dass der Teil des Kühlkreislaufs, in dem beim Arbeitsdruck gearbeitet wird, möglichst klein ist und nur wenige Komponenten des Kühlkreislaufs umfasst.

Nach einer bevorzugten Ausgestaltung ist der Entgaser ein offener Kühlwasserbehälter. Der offene Kühlwasserbehälter ist dem Umgebungsdruck ausgesetzt, so dass das Gas in der Kühlflüssigkeit, welches beim Druckabfall vom Arbeitsdruck auf den Umgebungsdruck freigesetzt wird, ungehindert entweichen kann. Es sind hierbei keinerlei Armaturen erforderlich, um das Gas aus dem Kreislauf abzuführen.

Nach einer alternativen, bevorzugten Ausgestaltung ist der Entgaser ein Automatikentgaser. Ein Automatikentgaser ist insbesondere durch ein Sperrventil gekennzeichnet, welches durch das angesammelte Gas geöffnet und geschlossen wird. Ein Automatikentgaser stellt eine passive, sich selbst regelnde Armatur dar, für deren Betrieb keine elektrische Energie erforderlich ist.

Vorzugsweise ist die Vorrichtung zum Erzeugen des Druckabfalls eine nicht-regelbare Vorrichtung. Die Vorrichtung zum Erzeugen des Druckabfalls ist somit eine passive Vorrichtung, für deren Betrieb kein Energieaufwand erforderlich ist.

Zweckdienlicherweise ist die Vorrichtung zum Erzeugen des Druckabfalls eine Drosselstelle. Die Drosselstelle kann z.B. durch ein regelbares oder nicht-regelbares Ventil, durch eine Klappe oder eine Verengung in der Leitung gebildet sein.

Ein Ausführungsbeispiel der Erfindung wird anhand einer Zeichnung näher erläutert. Hierin zeigen schematisch:
- FIG 1: eine erste Ausführungsvariante eines einen Automatikentgaser enthaltenden Kühlkreislaufs mit optimiertem Druck der Kühlflüssigkeit, und
- FIG 2: eine zweite Ausführungsvariante eines zur Umgebung hin offenen Kühlkreislaufs mit angepasstem Druck der Kühlflüssigkeit.

Gleiche Bezugszeichen haben in den verschiedenen Figuren die gleiche Bedeutung.

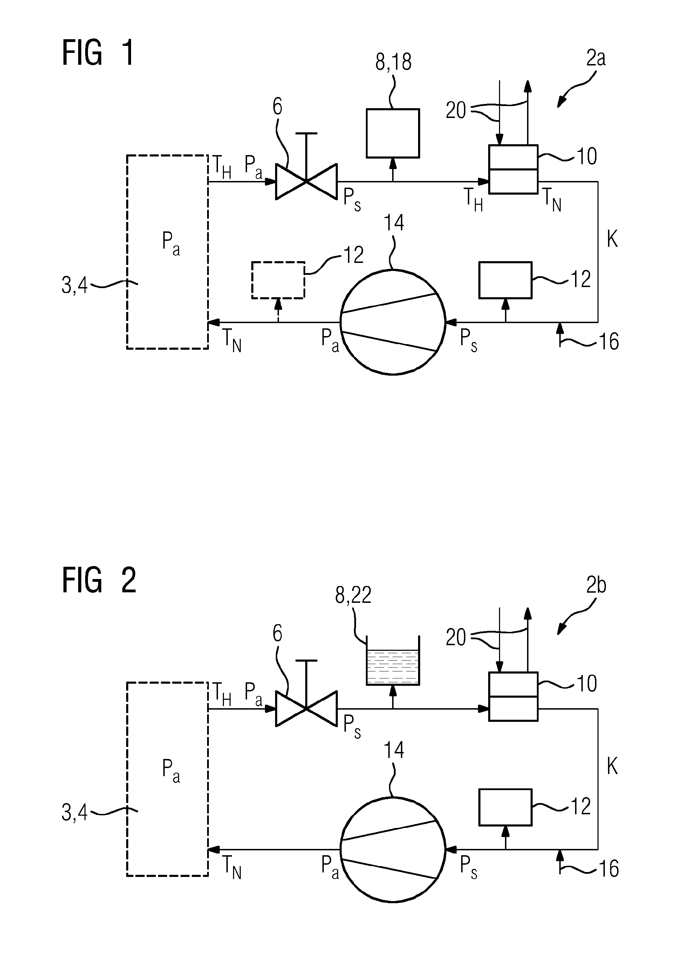

In FIG 1 ist ein erster Kühlkreislauf 2a zum Kühlen einer elektrochemischen Zelle 4 gezeigt. Die elektrochemische Zelle 3, die eine Wärmequelle darstellt, ist im gezeigten Ausführungsbeispiel eine PEM-Brennstoffzellenanordnung 4 (z.B. ein PEM-Brennstoffzellenstack). Die zu kühlende Wärmequelle 4 kann jedoch auch eine andere Art elektrochemischer Zelle sein, z.B. eine Elektrolysezelle.

Die Kühlung der Brennstoffzellenanordnung 4 erfolgt hierbei mit Hilfe einer Kühlflüssigkeit K, insbesondere mit Hilfe von deionisiertem Wasser, welches weiterhin als Kühlwasser K bezeichnet wird. Der Kühlkreislauf 2a umfasst eine Drosselstelle 6, einen Automatikentgaser 8, einen Wärmetauscher 10, ein Ausdehnungsgefäß 12 sowie eine Kühlmittelpumpe 14. Mit dem Pfeil 16 ist ein Kühlmittelzulauf in den Kühlkreislauf 2a angedeutet. Im gezeigten Ausführungsbeispiel ist das Ausdehnungsgefäß 12, dessen Funktion ist, Druckschwankungen aufgrund von Temperaturänderungen, die zu einer Ausdehnung des Kühlwassers führen, aufzunehmen, der Kühlmittelpumpe 14 vorgeordnet. Möglich ist jedoch auch, dass das Ausdehnungsgefäß 12 zwischen der Kühlmittelpumpe 14 und der PEM-Brennstoffzellenanordnung 4 angeordnet ist, wobei es unter Umständen für andere Druckgrenzen ausgelegt ist, was in FIG 1 durch eine gestrichelte Linie angedeutet ist.

Vor der Brennstoffzellenanordnung 4 befindet dich die Temperatur T_{N} des Kühlwassers K auf einem niedrigeren Niveau bei ca. 65°C. Nach der PEM-Brennstoffzellenanordnung 4 ist die Temperatur T_{H} der PEM-Brennstoffzellenanordnung 4 erhöht, im Wesentlichen ist T_{H} gleich einer Betriebstemperatur in der PEM-Brennstoffzellenanordnung 4, die bei ca. 70°-75°C liegt.

Für den einwandfreien Betrieb der PEM-Brennstoffzellenanordnung 4 ist von großer Bedeutung, dass das Kühlwasser K kein Gas bzw. keine Luftbläschen enthält, da sich diese an der Oberfläche der Bipolarplatten zwischen den einzelnen Brennstoffzellen festsetzten können und dadurch die Wärmeabfuhr von den Bipolarplatten erschwert wird. Zum Entfernen des im Betrieb der PEM-Brennstoffzellenanordnung 4 in das Kühlwasser K gelangten Gases, ist beim geschlossenen Kühlkreislauf 2a gemäß FIG 1 vorgesehen, dass der Druck des Kühlwassers K vor der Brennstoffzellenanordnung 4 erhöht wird. Auf diese Weise kann das Kühlwasser K, wenn es die PEM-Brennstoffzellenanordnung 4 durchströmt, möglichst viel Gas aufnehmen und abtransportieren.

Die Druckerhöhung des Kühlwassers K erfolgt durch das Zusammenspiel der Kühlmittelpumpe 14 und der Drosselstelle 6. Im Zulauf der Kühlmittelpumpe 14 herrscht im Kühlkreislauf 2a ein Systemdruck pₛ. Der Systemdruck pₛ wird etwas höher als den Umgebungsdruck eingestellt, insbesondere bei ca. 2 bar über dem Umgebungsdruck, d.h. der maximale Systemdruck pₛ beträgt 3 bar. Aufgrund der Druckverluste im System kann der Systemdruck pₛ teilweise auf 1,5 bar abfallen.

Nach der Kühlmittelpumpe 14 in Strömungsrichtung des Kühlwassers K wird ein höherer Arbeitsdruck pₐ eingestellt, der ca. 0,25 bar über dem Systemdruck pₛ liegt. Die Drosselstelle 6 ist unmittelbar der PEM-Brennstoffzellenanordnung 4 nachgeschaltet und sorgt für einen rapiden Druckabfall, so dass in Strömungsrichtung des Kühlwassers K nach der Drosselstelle 6 in den Leitungen des Kühlkreislaufs 2a wieder der Systemdruck pₛ herrscht.

Durch den Druckabfall, bewirkt durch die Drosselstelle 6, hat das Kühlwasser K eine geringere Gaslöslichkeit und vom Kühlwasser K in der Brennstoffzellenanordnung 4 aufgenommenes Gas gast ab und wird über den Entgaser 8 abgeführt. Der Entgaser 8 ist in diesem Ausführungsbeispiel ein Automatikentgaser 18. Der Automatikentgaser 18 stellt hierbei eine passive Komponente dar, bei der keine Druckregelung von Außen erfolgt, so dass der Automatikentgaser 18 ebenfalls im Wesentlichen bei der Systemdruck pₛ betrieben wird.

Nach dem Automatikentgaser 18 strömt das entgaste Kühlwasser K anschließend in den Wärmetauscher 10. Durch den Wärmetausch mit einem externen Kühlwasser, welcher Vorgang durch die Pfeile 18 angedeutet ist, wird die Temperatur des Kühlwassers K auf die niedrigere Temperatur T_{N} abgesenkt. Durch die Zirkulation des Kühlwassers K im Kühlwasserkreislauf 2a wiederholt sich dieser Vorgang mehrmals im Betrieb der Brennstoffzellenanordnung 4.

Der Kühlwasserkreislauf 2b gemäß FIG 2 unterscheidet sich vom Kühlwasserkreislauf 2a gemäß FIG 1 im Wesentlichen dadurch, dass als Entgaser 8 ein offener Behälter 22 eingesetzt wird, aus dem die Luft bei Umgebungsdruck aus dem Kühlwasser K entweicht. Eine derartige Vereinfachung des Entgasers 8 ist dadurch ermöglicht, dass der Systemdruck pₛ im Kühlwasserkreislauf 2b im Wesentlichen dem Umgebungsdruck gleich ist. Darüber hinaus ist beim Kühlwasserkreislauf 2b gemäß FIG 2 kein Ausdehnungsgefäß vorgesehen, da das Druckniveau durch den Umgebungsdruck fixiert ist.

Im Gegensatz zur bisherigen Praxis, bei der das Kühlwasser K die elektrochemische Zelle 3 bei Systemdruck durchströmt und der Druckabfall anschließend erst im Entgaser 8 stattfindet (z.B. indem in einem Vakuum-Entgaser Unterdruck eingestellt wird) weist im Betrieb der in den Figuren 1 und 2 gezeigten Kühlkreisläufe 2a, 2b das Kühlwasser K innerhalb der elektrochemischen Zelle 3 einen erhöhten Druck auf und der Entgaser 8 funktioniert beim Systemdruck pₛ bzw. bei Umgebungsdruck. Dabei bildet der Systemdruck pₛ den niedrigeren Druck innerhalb des entsprechenden Kühlkreislaufs 2a, 2b. Der Energieverbrauch zum Einstellen des höheren Arbeitsdrucks pₐ wird durch Sättigen des Kühlmittels (bezogen auf den Systemdruck pₛ) und das anschließende passive Untersättigen des Kühlwassers K (bezogen auf den Arbeitsdruck pₐ), was zu einer erhöhten Zuverlässigkeit im Betrieb des Kühlkreislaufs führt, sowie durch das Weglassen eines aktiven Vakuum-Entgasers kompensiert.

## Patentansprüche

1. Kühlkreislauf (2a, 2b) zum Kühlen einer elektrochemischen Zelle (3), insbesondere einer Brennstoffzellenanordnung (4), mit Hilfe einer Kühlflüssigkeit (K) zum Abführen von Wärme aus der elektrochemischen Zelle (3), wobei eine Vorrichtung (6) zum Erzeugen eines Druckabfalls von einem höheren Arbeitsdruck (pₐ), den die Kühlflüssigkeit (K) beim Kühlvorgang in der elektrochemischen Zelle (3) aufweist, auf einen niedrigeren Systemdruck (pₛ), der außerhalb der elektrochemischen Zelle (3) herrscht, vorgesehen ist und wobei der Vorrichtung (6) zum Erzeugen des Druckabfalls ein Entgaser (8) zum Entfernen von Gas, welches aus der Kühlflüssigkeit (K) entweicht, nachgeschaltet ist.

2. Kühlkreislauf (2a, 2b) nach Anspruch 1,
wobei der Entgaser (8) für ein Entfernen des freigesetzten Gases bei Systemdruck (pₛ) ausgebildet ist.

3. Kühlkreislauf (2a, 2b) nach einem der vorhergehenden Ansprüche,
wobei die Vorrichtung (6) zum Erzeugen des Druckabfalls unmittelbar der elektrochemischen Zelle (3) nachgeschaltet ist.

4. Kühlkreislauf (2a, 2b) nach einem der vorhergehenden Ansprüche,
wobei der Systemdruck (pₛ) geringfügig über dem Umgebungsdruck liegt, insbesondere ca. 0,5 bar bis 2,5 bar über dem Umgebungsdruck liegt.

5. Kühlkreislauf (2a, 2b) nach einem der vorhergehenden Ansprüche,
wobei der Arbeitsdruck (pₐ) mindestens 0,2 bar, insbesondere mindestens 0,25 bar über dem Systemdruck (pₛ) liegt.

6. Kühlkreislauf (2a, 2b) nach einem der vorhergehenden Ansprüche,
wobei dem Entgaser (8) ein Wärmetauscher (10) nachgeschaltet ist.

7. Kühlkreislauf (2a, 2b) nach einem der vorhergehenden Ansprüche,
wobei eine Pumpe (13) zum Einspeisen der Kühlflüssigkeit (K) in die elektrochemische Zelle (3) vorgesehen ist, wobei der Arbeitsdruck (pₐ) zwischen der Pumpe (13) und der Vorrichtung (6) zum Erzeugen des Druckabfalls eingestellt ist.

8. Kühlkreislauf (2a, 2b) nach einem der vorhergehenden Ansprüche,
wobei der Entgaser (8) ein offener Kühlflüssigkeitsbehälter (22) ist.

9. Kühlkreislauf (2a, 2b) nach einem der Ansprüche 1 bis 7, wobei der Entgaser (8) ein Automatikentgaser (18) ist.

10. Kühlkreislauf (2a, 2b) nach einem der vorhergehenden Ansprüche,
wobei die Vorrichtung (6) zum Erzeugen des Druckabfalls eine nicht-regelbare Vorrichtung ist.

11. Kühlkreislauf (2a, 2b) nach einem der vorhergehenden Ansprüche,
wobei die Vorrichtung (6) zum Erzeugen des Druckabfalls eine Drosselstelle ist.

12. Verfahren zum Betreiben eines Kühlkreislaufs (2a, 2b) zum Kühlen einer elektrochemischen Zelle (3), insbesondere einer Brennstoffzellenanordnung (4), wobei mit Hilfe einer Kühlflüssigkeit (K) Wärme aus der elektrochemischen Zelle (3) abgeführt wird, wobei im Kühlkreislauf (2a, 2b) ein Druckabfall von einem höheren Arbeitsdruck (pₐ), den die Kühlflüssigkeit (K) beim Kühlvorgang in der elektrochemischen Zelle (3) aufweist, auf einen niedrigeren Systemdruck (pₛ), der im Kühlkreislauf (2a, 2b) außerhalb der elektrochemischen Zelle (3) herrscht, erzeugt wird und wobei nach dem Druckabfall Gas, welches aus der Kühlflüssigkeit (K) entweicht, entfernt wird.
